# EUROPEAN PATENT SPECIFICATION

(11) **EP 0 825 938 B1**
(45) Date of publication and mention of the grant of the patent: **12.04.2000**
(21) Application number: 96908403.7
(22) Date of filing: 15.02.1996
(51) Int. Cl.: B60S 9/12

(54) **SUPPORT LEG**
STÜTZBEIN
PIED DE SUPPORT

(30) Priority: 03.05.1995 SE 9501626
(43) Date of publication of application: 04.03.1998
(73) Proprietor: Jonsered Cranes AB, 824 83 Hudiksvall (SE)
(72) Inventor: NILSSON, Hans, S-667 33 Forshaga (SE)
(74) Representative: Johansson, Lars E.
(86) International application number: SE9600201
(87) International publication number: WO9634782

(56) References cited:
- WO-A-94/04399
- NO-B- 148 181

## Description

### Technical Field of the Invention

This invention relates to a support leg of the type that comprises an upper part being pivotable around a joint between a raised, inactive position and a lowered, active position, and a lower part being protrudable relative to said upper part, said lower part having a support foot for bearing upon the ground when the support leg is in its lowered position, a power mechanism being provided on the upper leg part, said mechanism being capable of applying a tractive force to one end of a flexible tractive means, e.g. a chain, a rope or similar, which is laid around a runner means and which at its opposite end is connected with a fixed fastening point, the application of tractive force upon the flexible tractive means forcing the support leg to pivot around the joint from the lowered, active position towards the raised, inactive position.

Usually, support legs of the type referred to above are mounted on a vehicle, more specifically at the free end of a supporting beam that is telescopically movable relative to the frame of the vehicle, and in their inactive position they are most frequently, although not necessarily, in a position pointing vertically upwardly from the joint, from which position said leg is pivoted downwards by 180° to a position pointing vertically downwardly, in which position the lower part may be protruded out from the upper part and be borne with its support upon the ground (in some constructions, the support leg is raised from its active position to the inactive one by an angle that is smaller than 180°, for instance 135°, 90° or 45°).

### State of the Art

A support leg of the type referred to in the preamble is previously known from SE 9202417-3 and from WO-A-9404399. In this known support leg, the power mechanism consists of a spe<cial hydraulic cylinder that is arranged on the outside of the upper part of the support leg, with the cylinder pointing towards the free end of the support leg and with the piston rod connected with the flexible means. In the lowered state of the support leg, the piston rod is maximally pushed out of the cylinder. When drawing in the piston rod into the cylinder, the support leg is forced to pivot in the direction of its raised position. Albeit this support leg is functionally satisfactory, it has a number of disadvantages. One drawback is that the special hydraulic cylinder per se is expensive to acquire. Moreover, the special hydraulic cylinder requires a complicating cooperation with the established hydraulic system for the main cylinder, having the purpose of shortening and lengthening the support leg.

### Objects and Characteristics of the Invention

The present invention aims at removing the above mentioned disadvantages and at providing an improved and simplified support leg construction. Thus, a primary object of the invention is to create a support leg which in a simple way may be pivoted while utilizing the power that is developped by the own main cylinder of the support leg at shortening and lengthening, respectively, i.e., without the help of any supplementary cylinder. A further object of the invention is to provide a support leg whose adjusting in different raised positions may be effected in a simple way.

According to the invention, at least the primary object is attained by the features that are defined in the characterizing clause of claim 1. Further, advantageous embodiments of the invention are defined in the dependent claims.

### Brief Description of the Appended Drawings

In the drawings
- Fig 1: is a front view of a support leg according to the invention, shown in three different adjustment positions,
- Fig 2: is a side view of the lowered support leg as seen from the left in fig 1,
- Fig 3: is an enlarged and partly cut front view of the support leg according to fig 1, and
- Fig 4: is a side view, as seen from the right in fig 3, of a so called box comprised by the upper part of the support leg.

### Detailed Description of a Preferred Embodiment of the Invention

In the drawings, a support leg is generally designated 1 and comprises an upper part designated 2 in its entirety and a lower part 3 which at its free end has a support foot 4. In the example, the upper part 2 is composed of two different parts, namely a so called box 5 and a cylinder 6 included in a hydraulic cylinder mechanism whose piston rod forms the lower part 3. In a conventional manner, this hydraulic cylinder mechanism is double-acting, i.e., the piston rod 3 may be pulled into and pushed out of, respectively, the cylinder 6 and be adjusted into the desired position relative to the same. The support leg 1 is in its entirety mounted upon the free end of a supporting beam 7, more specifically via a joint 8 that makes possible a pivoting of the support leg relative to the supporting beam. In turn, the beam 7 is mounted on the frame of a not shown vehicle, perpendicularly to the longitudinal extension of the vehicle. The beam is telescopically displaceable relative to the frame, so that the support leg may be conveyed out of an inactive position near one of the sides of the vehicle to an active position that is remote from this starting position.

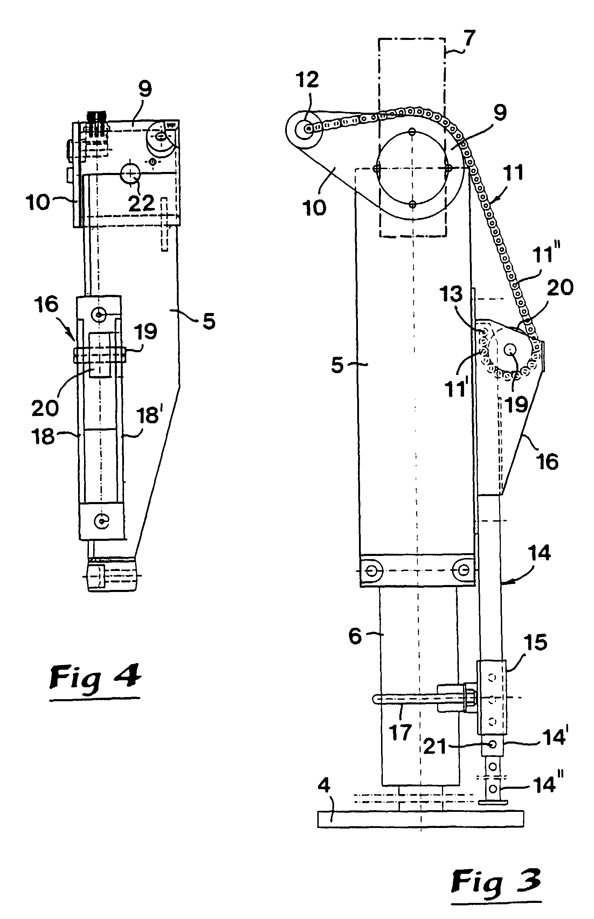

As may be seen in fig 4, the box 5 has a sleeve element 9 which is rotatably mounted in bearings on a shaft pivot (not shown) protruding from the free end of the beam 7. A laterally protruding lug 10 is fixedly fastened upon the free end of this shaft pivot. This lug serves as an attachment for a flexible means 11 which in the example has the form of a chain. More specifically, one of the ends of the chain is attached at a point 12 on the lug 10 and runs over the external side of the sleeve element 9 to the opposite end 13.

As described so far, the support leg 1 is substantially previously known by SE 9202417-3. However, in to the previously known support leg the flexible tractive means is connected with a movable piston rod included in a special hydraulic cylinder that is mounted on the outside of the upper part of the support leg. Contrary thereto, according to the present invention, the chain 11 is connected with a rod designated 14 in its entirety. More specifically, the end 13 of the chain 11 is connected with the rod 14 in the region of one of its ends, at the same time as the opposite end of the rod is actuatable by the support foot 4. The rod is displaceably movable by being arranged on one hand in a guiding collar 15, and on the other hand in a cross-sectionally U-shaped guide 16 placed on the outside of the box 5. The guiding collar 15 is fixedly attached to the outside of the cylinder 6 by means of a clamping means 17. The guide 16 has two separate, mutually parallel side walls 18, 18' with holes for a shaft 19, on which is arranged a roller 20 forming a pulley means for the chain 11. More specifically, this pulley means separates inner and outer parts 11' and 11", respectively, of the chain. At its upper end, the rod 14 is cross-sectionally U-shaped, with an inner web that may pass within the roller 20, and with two flanges that may pass in the spaces between the flanges 18, 18' and the roller 20.

According to the shown, preferred embodiment, the rod 14 is composed of two telescopically inter-movable parts 14', 14", which may be adjusted and locked in different positions relative to each other, for instance by means of at least one cotter that may be introduced into either of a number of holes 21 in at least one of the two parts.

In the sleeve element 9 are made diametrically opposed holes 22 through which may be led a locking pin for locking of the support leg in a transport or parking position. More specifically, the locking pin may be introduced into one of several diametrically opposed holes through the shaft pivot on which the sleeve element 9 is rotatably mounted in bearings.

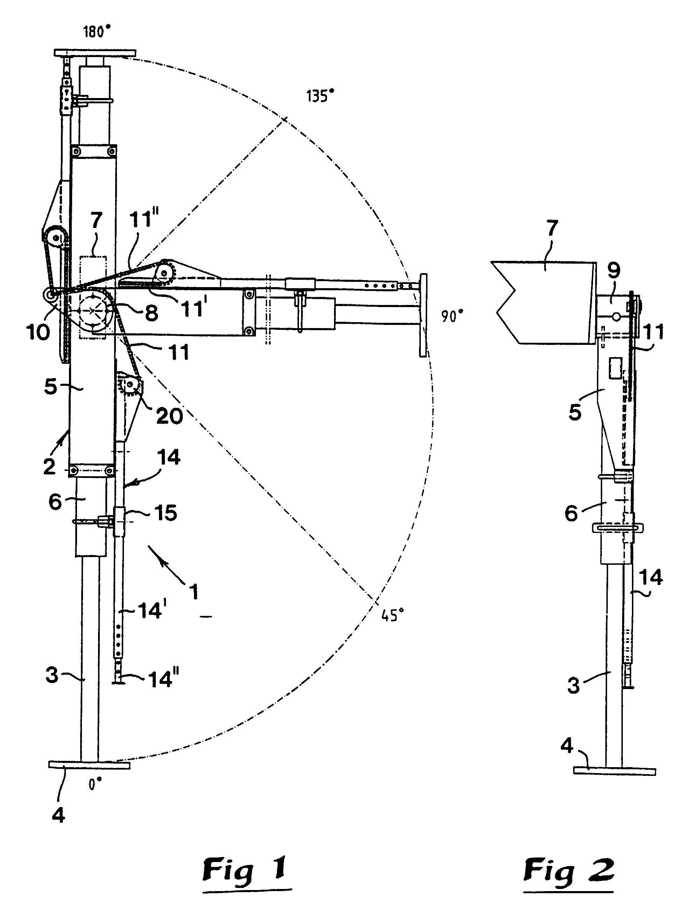

The described support leg functions in the following way: In the active position of the support leg according to fig 2 and 3, the support foot 4 is held pressed against the ground by means of the hydraulic pressure in the cylinder 6. In this condition, the lower end of the rod 14 is distanced from the support, although the same is situated in a lower end position in which the inner part 11' of the chain 11 has a minimal length. When the support leg, after having fulfilled its task, shall be brought to a raised or parked position, the piston rod 3 is pulled into the cylinder 6. During this motion, the support foot 4 hits the rod 14 which is carried in a direction upwards, along the upper part of the support leg. By the fact that the chain 11 is laid around the roller 20, which works as a pulley means, this will have the consequence that the inner part 11' of the chain is extended, at the same time as the outer part 11" is shortened. The shortening of the outer chain part 11" brings about that the support leg in its entirety is forced to pivot around the joint 8, more specifically to an upper end position or parking position that is determined by the length of the rod 14 (provided that the support foot 4 is always brought to one and the same inner end position relative to the cylinder 6). In case the rod 14 has maximal length by the movable telescopic part 14" having been adjusted into an outer end position in relation to the telescopic part 14', the support leg will be pivoted by 180° into a parking position in which the support leg points vertically upwards from the joint 8. By decreasing the length of the rod 14 in a suitable manner, the support leg may be brought to pivot to another angle than 180°, e.g. to the different positions which in fig 1 are designated 45°, 90° and 135°, respectively.

When the support leg is to be lowered from a parking position to its active position, vertically from the joint 8, one proceeds in the reverse order. The piston rod 3 is pulled out of the cylinder 6, whereby the support foot 4 is distanced from the cylinder and allows the rod to move in a direction away from the joint 8. In case the support leg in the parked position extends by an angle to the vertical plane, it will by its own weight automatically pivot downwards, in the direction of the active position, as the support retreats from the joint of the support leg. In case the support leg in the parked position is directed vertically upwardly from the joint, a light manual force may initially be required in order to get the support leg start pivoting around the joint.

A substantial advantage of the invention is that necessary pivoting of the support leg between the parked position and the active position may be performed by very simple and inexpensive means. Furthermore, the desired parked position may be chosen merely by the simple measure of lengthening or shortening the rod that serves as the power mechanism.

### Feasible Modifications of the Invention

The invention is not restricted solely to the embodiment as described and shown in the drawings. Thus, it is also feasible to apply the invention on such support legs which comprise upper and lower parts in the form of tubes being telescopically movable relative to each other, within which the necessary hydraulic cylinder is mounted. Moreover, instead of specifically a chain, it is also possible to use other flexible tractive means, such as ropes, wires or similar.

## Claims

1. A support leg comprising an upper part (2) being pivotable around a joint (8) between a raised, inactive position and a lowered, active position, and a lower part (3) being protrudable relative to said upper part, said lower part having a support foot (4) for bearing upon the ground when the support leg is in its lowered position, a power mechanism being provided on the upper leg part (2), said mechanism being capable of applying a tractive force to one end (13) of a flexible tractive means, (11) e.g. a chain, a rope or similar, which is laid around a runner means (9) and which at its opposite end is connected with a fixed fastening point (12), the application of tractive force upon the flexible tractive means forcing the support leg to pivot around the joint (8) from the lowered, active position towards the raised, inactive position, **characterized** in that the power mechanism consists of a rod (14) which is displaceably movable relative to the upper leg part (2), which rod at the region of its one end is connected with a flexible tractive means (11) and at its opposed end is actuatable by the support foot (4) of the lower leg part, and that the tractive means (11) is laid over a pulley means (20) that is fixedly connected with the upper leg part (2), said pulley means separating inner and outer parts (11', 11") of the tractive means, the lower leg part (3) on one hand, when pushing it into the upper one (2), forcedly carrying and displacing the rod (14) in a first direction while lengthening the inner part (11') and simultaneously shortening the outer part (11"), as the support leg pivots in the direction of a raised position, and on the other hand, when pulling it out of the upper leg part, allowing the rod (14) to move in the opposite direction while shortening the inner part (11') and simultaneously lengthening the outer part (11"), in order to thereby allow for a pivoting of the support leg in the direction of the lowered position.

2. Support leg according to claim 1, **characterized** in that the runner means consists of a sleeve element (9) connected with the upper leg part (2), said sleeve being rotatably mounted in bearings on a shaft pivot protruding from a beam, said shaft pivot having a free end to which is fixedly attached a lug (10) protruding laterally, which serves as an attachment for the flexible means (11).

3. Support leg according to claim 2, **characterized** in that the sleeve element (9) has holes (22) for a locking pin which may be introduced into at least one diametrical hole in the shaft pivot for locking the support leg in a raised transport position.

4. Support leg according to any one of the preceding claims, **characterized** in that the length of the rod (14) is changeable in order to make possible an adjustment of the support leg in different angular positions in a raised state.

## Patentansprüche

1. Stützbein, aufweisend einen oberen Teil (2), der um eine Gelenkverbindung (8) zwischen einer angehobenen inaktiven Position und einer abgesenkten aktiven Position verschwenkbar ist, und einen unteren Teil (3), der relativ zu dem oberen Teil vorschiebbar ist, wobei der untere Teil einen Stützfuß (4) zur Abstützung auf dem Untergrund aufweist, wenn das Stützbein sich in seiner abgesenkten Position befindet, einen Antriebsmechanismus, der auf dem oberen Beinteil (2) vorgesehen ist, wobei der Mechanismus in der Lage ist, eine Zugkraft an ein Ende (13) einer flexiblen Zugeinrichtung (11), beispielsweise einer Kette, eines Seils oder dergleichen, anzulegen, die um eine Laufeinrichtung (9) gelegt ist und an ihrem gegenüberliegenden Ende mit einem feststehenden Befestigungspunkt (12) verbunden ist, wobei das Anlegen einer Zugkraft auf die flexible Zugeinrichtung das Stützbein zwangsweise um die Gelenkverbindung (8) aus der abgesenkten aktiven Position in Richtung auf die angehobene inaktive Position bewegt, dadurch gekennzeichnet, dass der Antriebsmechanismus aus einer Stange (14) besteht, die relativ zu dem oberen Beinteil (2) verschiebbar beweglich ist, wobei die Stange im Bereich ihres einen Endes mit einer flexiblen Zugeinrichtung (11) verbunden ist und an ihrem gegenüberliegenden Ende durch den Stützfuß (4) des unteren Beinteils betätigbar ist, und dass die Zugeinrichtung (11) über eine Riemenscheibeneinrichtung (20) gelegt ist, die mit dem oberen Beinteil (2) fest verbunden ist, wobei die Riemenscheibeneinrichtung innere und äußere Teile (11', 11") der Zugeinrichtung trennt, wobei der untere Beinteil (3) einerseits, wenn er in den oberen Teil (2) geschoben bzw. gestoßen wird, zwangsweise die Stange (14) in einer ersten Richtung trägt und verschiebt, während der innere Teil (11') verlängert und gleichzeitig der äußere Teil (11") verkürzt wird, wenn das Stützbein in der Richtung einer angehobenen Position verschwenkt und andererseits, wenn er aus dem oberen Beinteil gezogen wird, er es der Stange (14) erlaubt, in der entgegengesetzten Richtung unter Verkürzung des inneren Teils (11') und gleichzeitiger Verlängerung des äußeren Teils (11") sich zu bewegen, um dadurch ein Verschwenken des Stützbeins in der Richtung der abgesenkten Position zu ermöglichen.

2. Stützbein nach Anspruch 1, dadurch gekennzeichnet, dass die Laufeinrichtung aus einer Buchse (9) besteht, die mit dem oberen Beinteil (2) verbunden ist, wobei die Buchse in Lagern auf einem Wellenschwenkgelenk drehbar angebracht ist, das von einem Balken vorsteht, wobei das Wellenschwenkgelenk ein freies Ende aufweist, an welchem eine Nase (10) fest angebracht ist, die seitlich vorsteht und als Halterung für die flexible Einrichtung (11) dient.

3. Stützbein nach Anspruch 2, dadurch gekennzeichnet, dass das Buchsenelement (9) Löcher (22) für einen Blockierstift aufweist, der in zumindest ein diametrales Loch in dem Wellenschwenkgelenk einführbar ist, um das Stützbein in einer angehobenen Transportposition zu blockieren.

4. Stützbein nach einem der vorangehenden Ansprüche, dadurch gekennzeichnet, dass die Länge der Stange (14) änderbar ist, um eine Einstellung des Stützbeins in unterschiedliche Winkelpositionen in einem angehobenen Zustand zu ermöglichen.

## Revendications

1. Pied support comportant une partie supérieure (2) qui peut pivoter autour d'un joint (8), entre une position haute, inactive, et une position basse, active, et une partie inférieure (3) qui peut dépasser par rapport à ladite partie supérieure, ladite partie inférieure présentant une semelle support (4) pour porter sur le sol lorsque le pied support se trouve dans sa position basse, un mécanisme moteur étant prévu sur la partie supérieure (2) du pied, ledit mécanisme étant capable d'appliquer une force de traction sur une première extrémité (13) d'un moyen flexible de traction (11), par exemple une chaîne, un câble ou semblable, qui est porté autour d'un moyen formant rail (9) et qui, à son extrémité opposée, est relié à un point d'accrochage fixe (12), l'application de la force de traction sur le moyen flexible de traction forçant le pied support à pivoter autour du joint (8), depuis la position basse, active, en direction de la position haute, inactive, caractérisé par le fait que le mécanisme moteur est constitué d'une tige (14) qui peut se déplacer par rapport à la partie supérieure (2) du pied, tige qui, dans la région de sa première extrémité, est reliée à un moyen flexible de traction (11) et, à son extrémité opposée, peut être manoeuvrée par la semelle support (4) de la partie inférieure du pied support, et par le fait que le moyen flexible de traction (11) passe sur un moyen formant poulie (20) qui est relié de façon fixe à la partie supérieure (2) du pied support, ledit moyen formant poulie séparant la partie intérieure et la partie extérieure (11', 11") du moyen flexible de traction, la partie inférieure (3) du pied support, d'une part, quand on la pousse dans la partie supérieure (2), en portant et déplaçant à force la tige (14) dans une première direction tout en allongeant la partie intérieure (11') et en raccourcissant simultanément la partie extérieure (11"), le pied support pivotant en direction de la position haute, et, d'autre part, quand on la tire hors de la partie supérieure du pied support, laissant la tige (14) se déplacer en direction opposée, tout en raccourcissant la partie intérieure (11') et en allongeant simultanément la partie extérieure (11") de façon à laisser pivoter le pied support en direction de la position basse.

2. Pied support selon la revendication 1, caractérisé par le fait que le moyen formant rail est constitué d'un élément rapporté (9) relié à la partie supérieure (2) du pied support, ledit élément rapporté étant monté, avec liberté de rotation, sur des portées placées sur un pivot qui dépasse d'une poutre, ledit pivot ayant une extrémité libre à laquelle est attachée de façon fixe une oreille (10) qui dépasse latéralement et sert de fixation pour le moyen flexible (11).

3. Pied support selon la revendication 2, caractérisé par le fait que l'élément rapporté (9) présente des trous (22) pour une goupille de verrouillage que l'on peut introduire dans au moins un trou diamétral dans le pivot pour verrouiller le pied support en position haute de transport.

4. Pied support selon l'une quelconque des revendications précédentes, caractérisé par le fait que l'on peut modifier la longueur de la tige (14) pour permettre un réglage du pied support dans différentes positions angulaires en situation haute.
